# FASCICULE DE BREVET EUROPEEN

(11) **EP 2 497 965 B1**
(45) Date de publication et mention de la délivrance du brevet: **04.05.2016**
(21) Numéro de dépôt: 12354021.3
(22) Date de dépôt: 08.03.2012
(51) Int. Cl.: F16B 37/12, F16B 37/06, F16B 37/04

(54) **Dispositif de fixation muni d'un élément à sertir mobile par rapport à un écrou du dispositif, et procédé de sertissage du dispositif**
Befestigungsvorrichtung, die mit einem mobilen Klemmelement zum Anpressen gegen eine Mutter der Vorrichtung ausgestattet ist, und Festklemmverfahren der Vorrichtung
Attachment device provided with a crimping element that is mobile relative to a nut of the device and crimping method for the device

(30) Priorité: 09.03.2011 FR 1100704
(43) Date de publication de la demande: 12.09.2012
(73) Titulaire: Bollhoff Otalu S.A., 73490 La Ravoire (FR)
(72) Inventeur: Sutz, Xavier, 73420 Voglans (FR); Fereire, Yann, 26140 Anneyron (FR); Lejars, Patrick, 73610 St. Alban de Montbel (FR)
(74) Mandataire: Hecké, Gérard

(56) Documents cités:
- WO-A1-2008/091495
- FR-A1- 2 945 088
- US-A- 4 298 297

## Description

### Domaine technique de l'invention

L'invention est relative à un dispositif de fixation comportant :
- un élément à sertir comprenant un premier fût,
- un écrou comportant un second fût disposé dans la continuité du premier fût, ledit second fût étant muni d'un taraudage intérieur, et un élément d'accroche monté sur le premier fût de sorte à permettre un débattement radial du second fût par rapport au premier fût.

### État de la technique

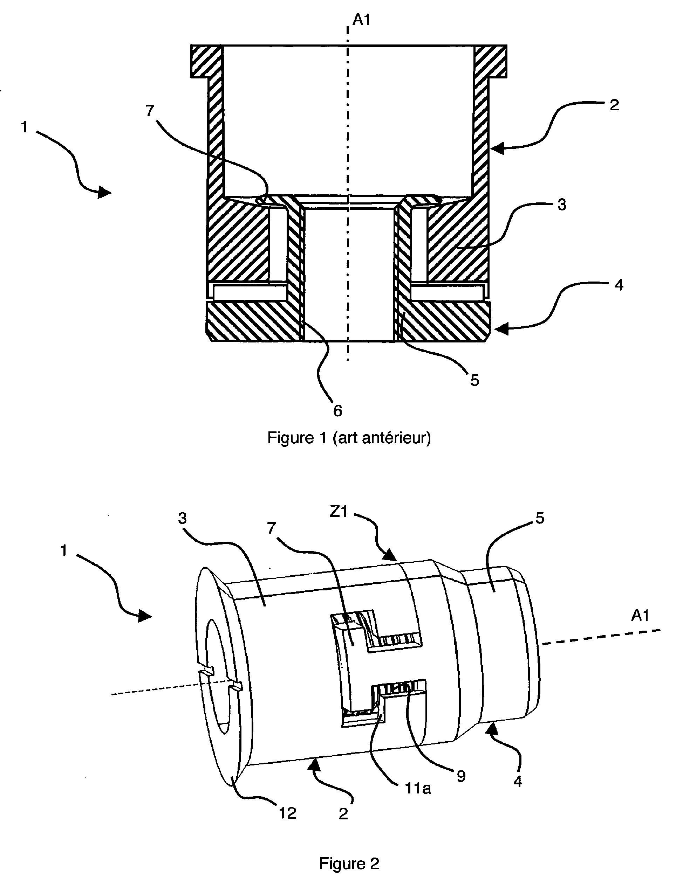

La demande de brevet français FR0902097 décrit un dispositif de fixation 1, illustré à la figure 1, muni d'un élément à sertir 2 comprenant un premier fût 3, et d'un écrou 4 comportant un second fût 5, muni d'un taraudage 6 intérieur. Le second fût 5 est disposé dans la continuité du premier fût 3, et l'écrou 4 comporte un élément d'accroche 7 monté sur le premier fût 3 de sorte à permettre un débattement radial du second fût 5 par rapport au premier fût 3, c'est-à-dire désaligner les axes des premier et second fûts (sur la figure 1, les premier et second fûts sont coaxiaux selon l'axe A1).

Le désalignement radial permet un rattrapage de jeu radial après sertissage de l'élément à sertir 2 au niveau d'un trou d'un support. Ceci est avantageux pour fixer dans l'écrou un organe vissé même si le trou du support n'a pas été percé exactement au bon endroit.

Le dispositif de fixation décrit ci-dessus permet uniquement un rattrapage du jeu radial qui peut s'avérer insuffisant en fonction de la destination dudit dispositif.

En outre un tel dispositif de fixation est assez difficile à réaliser car l'élément d'accroche 7 est formé après introduction du second fût 5 dans le premier fût 3 par déformation de son extrémité libre. Cette déformation doit être correctement calibrée de sorte à permettre uniquement le débattement radial.

### Objet de l'invention

L'objet de l'invention vise à réaliser un dispositif de fixation simple à assembler et permettant un meilleur débattement radial que le dispositif de l'art antérieur tout en permettant un débattement axial.

On tend vers cet objet en ce que :
- l'élément d'accroche est configuré avec le premier fût pour permettre un débattement axial du second fût par rapport au premier fût et former une butée dudit débattement axial,
- un insert est vissé dans le taraudage du second fût, ledit insert pénétrant dans un tronçon du premier fût ayant un diamètre intérieur supérieur au diamètre extérieur de l'insert de sorte à permettre le débattement radial du second fût par rapport au premier fût et former une butée dudit débattement radial.

Selon un perfectionnement, la butée de débattement radial et la butée de débattement axial sont agencées pour maintenir dans un état assemblé l'élément à sertir avec l'écrou.

Selon un mode de réalisation préféré, l'insert est un filet hélicoïdal.

Dans une mise en oeuvre particulière, le premier fût comporte un premier logement recevant l'élément d'accroche de l'écrou, ledit premier logement ayant une forme complémentaire à l'élément d'accroche et des dimensions supérieures à celles de l'élément d'accroche pour permettre les débattements axial et radial.

Selon une variante, le premier logement est formé dans le premier fût au niveau de sa surface extérieure.

Selon une autre variante, le premier logement forme une ouverture débouchante entre une surface intérieure et la surface extérieure du premier fût.

Selon un perfectionnement, le premier fût comporte un second logement formant une ouverture débouchante entre la surface intérieure et la surface extérieure du premier fût, le second logement étant disposé face au premier logement, ledit second logement coopérant avec un élément d'accroche associé.

Selon une mise en oeuvre particulière, l'élément d'accroche a une forme de T, la base du T formant la jonction de l'élément d'accroche avec une portée d'extrémité du second fût, ledit élément d'accroche s'étendant dans la continuité du second fût.

Selon un développement, l'élément à sertir comporte une collerette s'étendant radialement à une extrémité du premier fût opposée à l'écrou, et le premier fût comporte une zone fusible disposée entre la collerette et une zone de coopération de l'élément d'accroche avec le premier fût.

L'invention est aussi relative à un procédé de sertissage d'un dispositif de fixation tel que décrit, le procédé comportant les étapes successives suivantes :
- monter l'élément d'accroche sur le premier fût,
- visser dans le taraudage du second fût l'insert de sorte que ce dernier ait une portion pénétrant dans le premier fût.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente un dispositif de fixation selon l'art antérieur,
- la figure 2 illustre un dispositif de fixation vu en trois dimensions,
- la figure 3 illustre le dispositif de fixation de la figure 2 vu en coupe,
- la figure 4 illustre une mise en oeuvre particulière du dispositif de fixation,
- la figure 5 illustre une vue en trois dimensions de l'élément de fixation,
- les figures 6 et 7 illustrent respectivement une vue en coupe et une vue de côté du dispositif de fixation dans laquelle l'élément d'accroche et l'insert sont en butées respectivement axiale et radiale,
- la figure 8 illustre une vue du dispositif dans une position de réglage angulaire,
- les figures 9 à 11 illustrent les étapes successives d'un procédé de sertissage du dispositif de fixation avec un support.

### Description de modes préférentiels de réalisation

Le dispositif de fixation décrit ci-après est remarquable par rapport à l'art antérieur en ce qu'il permet un réglage radial et axial de l'écrou par rapport à l'élément à sertir pour obtenir un meilleur débattement que dans les dispositifs connus de l'art antérieur. Il résulte d'une combinaison préférentielle des réglages axial et radial un réglage angulaire de l'écrou par rapport à l'élément à sertir. De plus, l'assemblage d'un tel dispositif est simple, et ne demande pas une déformation particulière de l'écrou pour verrouiller son assemblage avec l'élément à sertir.

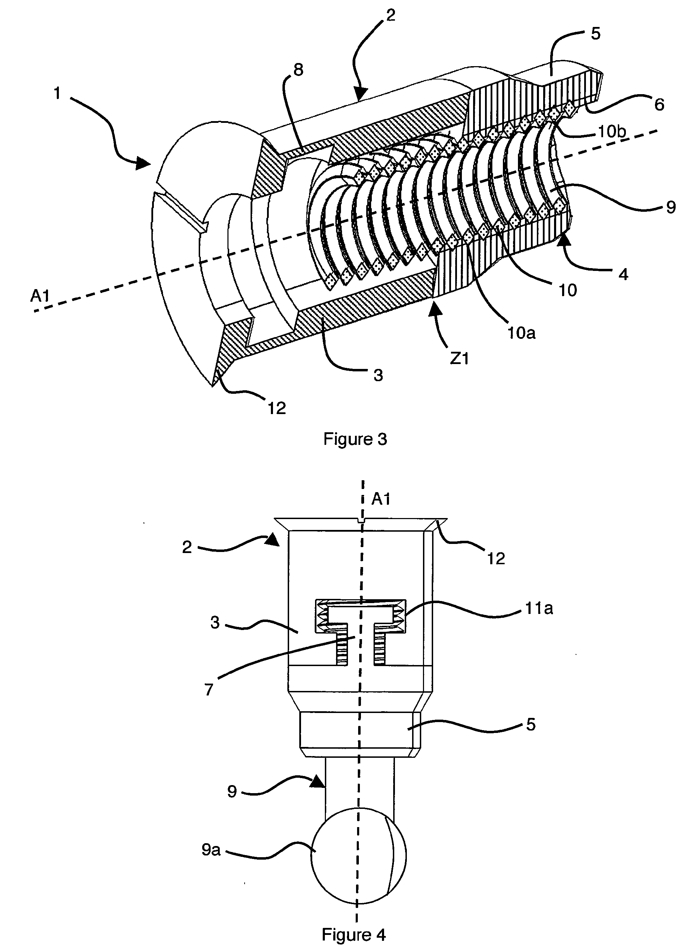

Sur les figures 2 et 3, le dispositif 1 de fixation comporte un élément à sertir 2 comprenant un premier fût 3.

L'élément à sertir 2 peut comporter une zone fusible 8. Un exemple de réalisation d'une telle zone fusible 8 est visible à la figure 3. La zone fusible 8 correspond en fait à une zone de plus grande déformabilité du premier fût 3. Autrement dit, lors d'un sertissage appliquant par exemple une force de compression sur l'élément à sertir 2 le long de l'axe A1 du premier fût 3, ce dernier se déformera uniquement au niveau de la zone fusible 8. Sur l'exemple particulier de la figure 3, la zone fusible 8 est délimitée par une gorge annulaire formée au niveau de la surface interne du premier fût 3, dans un plan de préférence perpendiculaire à l'axe A1.

Le dispositif de fixation comporte en outre un écrou 4. L'écrou 4 comprend un second fût 5 muni d'un taraudage intérieur 6. Par taraudage intérieur, on entend que le fût comporte, selon son axe, un trou débouchant dont la surface intérieure de révolution comporte un filet en saillie destiné à recevoir par vissage un élément complémentaire. Le second fût 5 est disposé dans la continuité du premier fût 3, c'est à dire que le premier fût 3 et le second fût 5 comportent au moins une position dans laquelle ils sont coaxiaux (cette position est visible aux figures 2 et 3).

Dans la présente description, un fût désigne un élément muni d'un trou ou creux débouchant orienté selon l'axe longitudinal du fût.

Le fût peut être formé par au moins un cylindre, dont le diamètre interne peut varier. Le fût peut être obtenu par chambrage. Selon les exemples particuliers des figures 2 et 3, le premier fût 3 comporte un cylindre de révolution creux. Le second fût quant à lui est creux et comporte deux tronçon formant chacun un cylindre de dimensions extérieures différentes pour alléger le dispositif de fixation.

La surface extérieure du fût, notamment du premier fût 3, peut être de forme lisse, hexagonale, ou moletée. La forme hexagonale ou moletée permet avantageusement de procurer à l'élément à sertir 2 un profil anti-rotation lorsque ce dernier sera serti à un support.

L'axe d'un fût est déterminé selon sa hauteur, et est sensiblement parallèle à la courbe génératrice du cylindre associé au fût. Cet axe est illustré par la référence A1 aux figures 2 et 3 au niveau desquelles les deux fûts 3, 5 sont coaxiaux (figures 2 et 3).

L'écrou 4 est monté sur l'élément à sertir 2, notamment sur le premier fût 3. Le montage est réalisé par un élément d'accroche 7 de l'écrou 4. L'élément d'accroche 7 permet un débattement radial du second fût 5 par rapport au premier fût 3. En outre, l'élément d'accroche 7 est configuré avec le premier fût 3 pour permettre un débattement axial du second fût 5 par rapport au premier fût 3 et former une butée dudit débattement axial. La combinaison de ces débattements permet, de préférence, un débattement angulaire d'une extrémité du premier fût 3 proximale d'une extrémité du second fût 5.

Autrement dit, l'élément à sertir 2 et l'écrou 4 sont mobiles l'un par rapport à l'autre dans une certaine mesure. De préférence le débattement radial sera de plus ou moins 1 mm dans toutes les directions radiales perpendiculairement à l'axe A1, le débattement axial (orienté selon l'axe A1) d'environ 0,7mm et le débattement angulaire de plus ou moins 5 degrés. Sur les figures 2 et 3, l'élément d'accroche 7 est fixé à une extrémité du second fût 5 proximale du premier fût 3. De préférence, l'élément d'accroche 7 et le second fût 5 sont monoblocs.

Par débattement axial, on entend que le premier fût 3 peut se rapprocher ou s'éloigner du second fût 5, selon l'axe A1 sur les figures 2 et 3.

Par débattement radial, on entend que le premier fût 3 peut se déplacer radialement dans des directions différentes par rapport au second fût 5, ces directions de déplacement sont perpendiculaire à l'axe A1 des figures 2 et 3.

Comme indiqué précédemment, la combinaison de ces deux déplacements peut induire un débattement angulaire du premier fût 3 par rapport au second fût 5, autrement dit, les extrémités se faisant face des deux fûts peuvent se situer dans deux plans distincts sécants ou parallèles selon les positions.

De préférence, le débattement axial permet à une portée délimitée par une extrémité du premier fût 3 de venir en contact avec une portée correspondante délimitée par une extrémité du second fût 5. Sur les figures 2 et 3, les portées visées ci-dessus sont en contact au niveau d'une zone Z1.

Un insert 9 est vissé dans le taraudage 6 du second fût 5. L'insert 9 pénètre dans un tronçon du premier fût 3 ayant un diamètre intérieur supérieur au diamètre extérieur de l'insert 9 de sorte à permettre le débattement radial du second fût 5 par rapport au premier fût 3 et former une butée dudit débattement radial. Sur l'exemple des figures 2 et 3 l'insert 9 formant butée coopère avec la surface intérieure du premier fût 3 pour limiter le débattement radial. En effet, lorsque l'insert 9 se déplace radialement dans une direction, il va finir par venir en butée avec la surface intérieure du premier fût 3 ce qui va contraindre son déplacement, et donc celui de l'écrou 4 par rapport à l'élément à sertir 2.

De préférence, l'insert 9 a une dimension longitudinale supérieure à celle du taraudage 6 de l'écrou 4 et de la hauteur de l'élément d'accroche 7. Autrement dit, lorsqu'il est en place l'insert 9 coopère avec tout le taraudage 6 du second fût et dépasse dans le premier fût 3. De préférence, l'insert 9 comporte un tronçon s'étendant au-delà de l'élément d'accroche 7 dans le premier fût 3. Ceci permet d'optimiser la fonction de butée radiale de l'insert 9.

De préférence, les butées radiale et axiale coopèrent pour maintenir dans un état assemblé l'élément à sertir 2 avec l'écrou 4. Autrement dit, le débattement radial est ajusté de sorte que dans toutes les positions radiales du second fût 5 par rapport au premier fût 3, l'élément d'accroche 7 puisse, en cas de traction selon l'axe A1 sur le second fût 5 dans une direction opposée au premier fût 3, former avec le premier fût 3 une butée de débattement axial en venant en contact avec une surface du premier fût 3, empêchant un désassemblage de l'écrou 4 et de l'élément à sertir 2. La seule possibilité pour démonter le dispositif de fixation étant alors de retirer l'insert 9.

Avantageusement, l'élément d'accroche 7 est agencé avec le premier fût 3 de sorte à limiter la rotation du second fût 5 par rapport au premier fût 3. Ceci permet de faciliter le vissage de l'insert 9 dans l'écrou 4 lors de l'assemblage, ou le vissage d'un organe dans l'insert 9 si ce dernier est apte à recevoir par vissage ledit organe.

À titre d'exemple illustré à la figure 4, l'insert 9 est une tige filetée pouvant comporter à une extrémité une rotule 9a, la tige filetée est alors vissée par son extrémité opposé à la rotule 9a dans le second fût 5 à partir d'une extrémité du second fût 5 opposée à l'élément à sertir 2. Après vissage de la tige, la rotule 10 fait saillie du second fût 5 de sorte à permettre un accouplement de la rotule 9a avec un dispositif complémentaire.

Selon une réalisation préférentielle, l'insert 9 peut être un filet hélicoïdal aussi connu sous le nom de filet rapporté. Par filet hélicoïdal, on entend un élément comportant des spires d'extrémité circulaires, et se présentant de forme générale comme un ressort bien qu'il n'ait pas la fonction d'un ressort classique. Le filet hélicoïdal peut aussi comporter une spire de freinage garantissant l'intégrité du dispositif de fixation et, le cas échéant d'un organe vissé dans le filet, même si le tout est soumis à d'importantes vibrations. La spire de freinage peut se présenter, dans une coupe sensiblement perpendiculaire à l'axe longitudinal du filet hélicoïdal sous une forme polygonale, de sorte à provoquer un freinage important sur les flancs du filet hélicoïdal.

La figure 3 illustre un exemple de réalisation d'un filet hélicoïdal en place dans l'écrou 4. Selon cet exemple, la section d'une spire 10 est de type parallélogramme, de préférence, de type losange. Ainsi, le filet hélicoïdal comporte une première arête 10a coopérant avec le taraudage 6 du second fût 5, et une seconde arête 10b opposée à la première arête délimitant un filetage à l'intérieur du filet hélicoïdal apte à recevoir un organe vissé. En plus de former la butée visée précédemment, l'association de l'écrou et du filet hélicoïdal améliore la résistance mécanique lorsque organe est vissé par la suite à l'intérieur du filet hélicoïdal. En effet, lorsqu'un organe est vissé dans un taraudage correspondant d'un écrou, le filetage de cet organe coopère avec une très petite portion du taraudage de l'écrou du fait des contraintes de fabrication. Ceci peut induire une détérioration du maintien à la traction sur l'organe. Le filet hélicoïdal permet au contraire d'absorber ces contraintes mécaniques, et augmente ainsi la résistance à la traction de l'organe par rapport à l'écrou.

Le filet hélicoïdal pourra, de préférence, être mis en oeuvre par le produit de type filet rapporté Helicoil® plus du groupe Bollhoff.

Selon une mise en oeuvre du dispositif de fixation illustrée aux figures 2 et 4, le premier fût 3 comporte un logement 11a recevant l'élément d'accroche 7 de l'écrou 4. Le logement 11a a une forme complémentaire et de dimensions supérieures à l'élément d'accroche 7 de sorte à permettre les débattements radial et axial, et de préférence angulaire, du premier fût 3 par rapport au second fût 5 tout en permettant une rotation limitée du premier fût 3 par rapport au second fût 5. Ainsi, l'élément d'accroche 7 peut aussi former une butée en rotation autour de l'axe A1 de l'élément de sertissage 2 par rapport à l'écrou 4. La butée axiale formée par l'élément d'accroche 7 peut, notamment lors d'une traction appliquée à l'écrou 4 selon l'axe A1 dans une direction opposée à l'élément à sertir 2, venir en contact avec une surface du logement 11 a pour limiter le déplacement axial.

Sur l'exemple illustré aux figures 2 et 4, l'élément d'accroche 7 a une forme de T, la base du T formant la jonction de l'élément d'accroche 7 avec une portée d'extrémité du second fût 5. L'élément d'accroche 7 s'étend dans la continuité du second fût 5. Selon cet exemple, le logement recevant le T a, de préférence, des dimensions supérieures à celles dudit T, la barre horizontale du T formant la butée avec le premier fût 3. Ainsi, le logement 11a a aussi une forme ouverte en T, la barre du T de l'élément d'accroche a une dimension latérale supérieure à la dimension latérale de la barre verticale ouverte du T du logement afin d'assurer le maintien de l'assemblage entre l'écrou 4 et l'élément à sertir 2.

Sans l'insert 9, l'élément à sertir 2 et l'écrou 4 peuvent être accouplés par insertion radiale de l'élément d'accroche 7 dans le logement 11 a avant de visser l'insert 9 pour verrouiller l'assemblage.

Bien entendu, cette forme de T n'est pas limitative, l'homme du métier pourra donner toute forme à l'élément d'accroche 7 du moment que ce dernier puisse permettre un débattement radial et axial du second fût 5 par rapport au premier fût 3, et former une butée de débattement axial par exemple avec un logement du premier fût 3.

De préférence, le logement 11a est formé dans le premier fût 3 au niveau de sa surface extérieure. Sur l'exemple particulier des figures 2 et 4, la surface extérieure du premier fût 3 correspond à la surface définie par une courbe génératrice du cylindre. Comme illustré aux figures 2 et 4, le logement 11a peut, dans un mode préférentiel, former une ouverture débouchante entre une surface intérieure et la surface extérieure du premier fût 3. L'ouverture débouchante permet entre autres d'obtenir un meilleur débattement radial du second fût 5 par rapport au premier fût 3.

En fait, comme illustré aux figures 2 et 4, l'ouverture formant un logement 11a peut se présenter au moins en partie selon une saignée pratiquée dans la portée d'extrémité du premier fût 3 proximale de la portée d'extrémité du second fût 5. Sur les figures et 4, cette saignée est parallèle à l'axe A1 de sorte à délimiter la barre verticale de l'ouverture en forme de T.

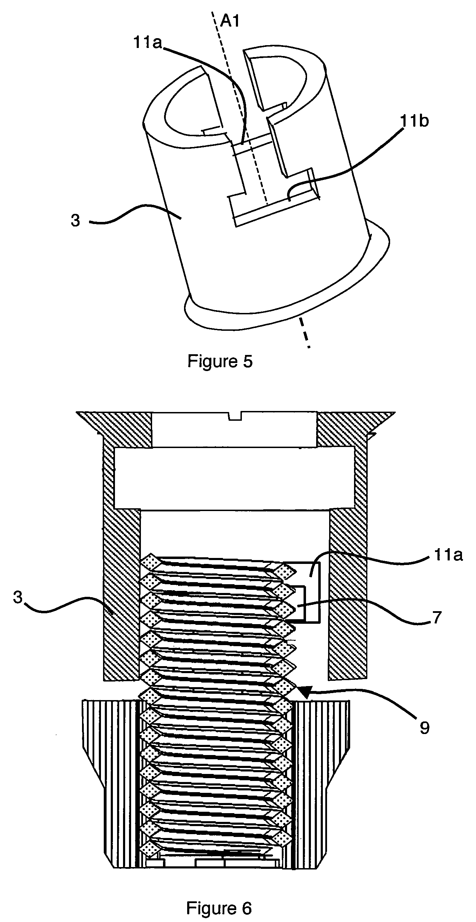

Sur la figure 5, le premier fût 3 comporte deux ouvertures débouchantes reliant sa surface intérieure à sa surface extérieure et formant respectivement deux logements 11 a, 11 b. Ces deux logements 11 a, 11 b sont disposés face à face, et comportent, de préférence, chacun une symétrie planaire par rapport à un plan commun passant par l'axe A1 du premier fût 3 pour favoriser le montage de l'écrou et de l'élément à sertir par insertion radiale. Les deux logements sont chacun associé à un élément d'accroche correspondant pour limiter le débattement axial. Les deux éléments d'accroche résultant ont aussi de préférence une symétrie planaire par rapport à un plan commun passant par l'axe de l'écrou.

En fait, l'insertion radiale est favorisée si un premier élément d'accroche peut d'abord traverser un premier logement afin de rejoindre le second logement qui lui est associé tout en permettant au second élément d'accroche de pénétrer dans le premier logement qui lui est associé. Dès lors, l'homme du métier pourra réaliser des logements et des éléments d'accroche identiques ou ayant des dimensions permettant de réaliser l'assemblage par insertion radiale. Il pourra aussi, si les dimensions intérieures du premier fût le permettent, insérer un premier élément d'accroche dans le creux du premier fût, puis par déplacement radial du second fût par rapport au premier fût, insérer le premier élément d'accroche dans un logement associé et le second élément d'accroche un autre logement associé (dans ce cas les dimensions peuvent différer entre les deux logements et leurs éléments d'accroche respectifs).

L'utilisation de deux ouvertures formant respectivement logement pour deux éléments d'accroche correspondants permet d'optimiser la répartition des efforts notamment lors d'une traction du second fût selon son axe. Ainsi, en cas de traction selon l'axe A1 de la figure 3, lorsqu'un élément d'accroche est en butée axiale, l'autre l'est aussi.

De préférence, lorsque le dispositif de fixation comporte deux éléments d'accroche, notamment disposés en regard, ces éléments sont formés dans la continuité du second fût 5, et ont la même épaisseur que ce dernier. Dès lors, le taraudage 6 du second fût 5 se prolonge au niveau de ces éléments d'accroche pour recevoir l'insert 9 par vissage.

Le cas échéant, le montage du filet hélicoïdal peut être réalisé, après avoir mis en aboutement l'écrou et l'élément à sertir, par insertion du filet hélicoïdal par le premier fût 5 puis par vissage dans le taraudage des éléments d'accroche, et enfin par vissage dans le taraudage intérieur 6 du second fût 5. Bien entendu l'inverse est aussi possible, c'est-à-dire que le filet hélicoïdal peut être vissé tout d'abord dans le taraudage du second fût 5.

Il résulte des réalisations du dispositif de fixation que ce dernier peut être assemblé par une première étape consistant à monter l'élément d'accroche 7 sur le premier fût 3, puis par une seconde étape consistant à visser dans le taraudage 6 du second fût 5 l'insert 9 de sorte que ce dernier ait une portion pénétrant dans le premier fût 3. Selon une variante, le montage de l'élément d'accroche 7 sur le premier fût est réalisé par insertion radiale de l'élément d'accroche 7 dans un logement correspondant du premier fût 3.

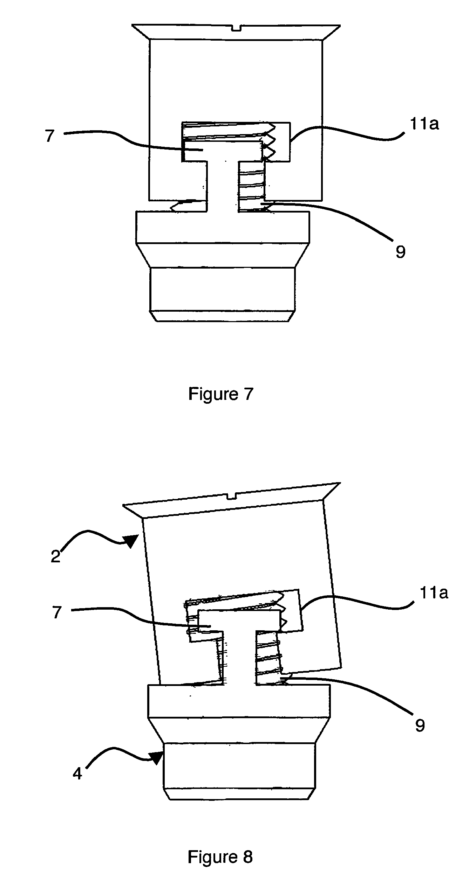

Les figures 6 et 7 illustrent un dispositif dans lequel l'insert 9 est en butée radiale avec une surface intérieure du premier fût 3, et dans lequel l'élément d'accroche 7 est en butée axiale avec une surface du logement 11 a.

Sur la figure 8, le dispositif est dans une position permettant un réglage angulaire. L'insert 9 est en butée contre une surface interne du premier fût 3, les dimensions supérieures du logement 11a par rapport aux dimensions de l'élément d'accroche 7 permettent le réglage angulaire de l'écrou 4 par rapport à l'élément à sertir 2.

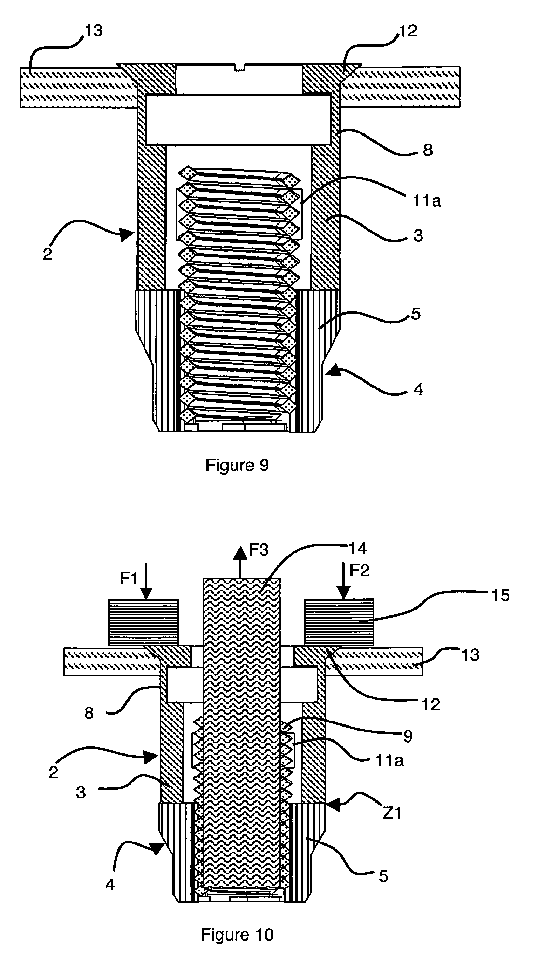

Les figures 9 à 11 illustrent un procédé de sertissage d'un dispositif tel que décrit précédemment.

L'élément à sertir 2 peut être serti sur une plaque ou sur tout élément de support 13 comprenant un trou au niveau duquel il sera serti. Pour cela, l'élément à sertir 2 comporte une collerette 12 (voir aussi en ce sens les figures 2 à 4) s'étendant radialement au niveau d'une extrémité du premier fût 3 opposée à l'écrou 4. La zone fusible 8 de l'élément à sertir 2 est disposée entre le ou les logements 11 a et la collerette 12, ou plus généralement entre la collerette 12 et une zone de coopération de l'élément d'accroche 7 avec le premier fût 3.

Sur la figure 9, le dispositif de fixation est inséré dans le trou de l'élément de support 13, par le second fût 5, jusqu'à ce que la collerette 12 vienne en appui avec l'élément de support 13.

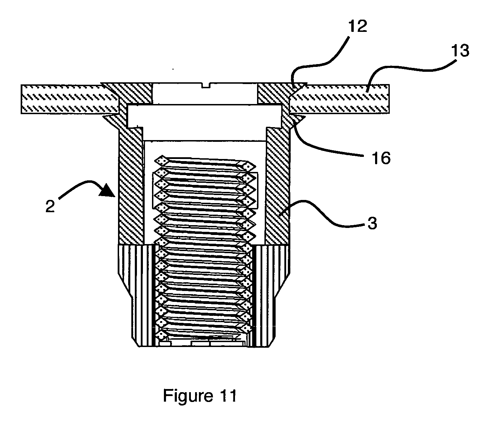

Ensuite comme illustré à la figure 10, une tige filetée 14 est insérée par l'extrémité du dispositif de fixation comportant la collerette 12 de sorte à être vissée soit dans le taraudage de l'écrou 4, soit comme sur la figure 8 dans le filetage intérieur du filet hélicoïdal formant l'insert 9. Une enclume 15 est alors reportée sur la collerette 12 pour appliquer une force de compression en direction du support 13 (flèches F1 et F2), et une force de traction (flèche F3) est appliquée sur la tige filetée 14 de manière opposée à la force de compression. La portée du second fût 5 portant les éléments d'accroche vient alors en contact avec la portée d'extrémité correspondante du premier fût 3 (zone Z1), le premier fût 5 est alors comprimé entre l'enclume 15 et le second fût 5 jusqu'à ce que la zone fusible 8 se déforme et vienne former un bourrelet 16 (figure 11) s'étendant radialement par rapport à la surface extérieure du premier fût 3. De préférence, lors de cette opération, seule la zone fusible 8 se déforme, le reste du dispositif de fixation conservant son intégrité. Le bourrelet 16 coopère avec la collerette 12 pour assurer une liaison totale de l'élément à sertir 2 avec le support 13. Par liaison totale, on entend que tout mouvement d'un premier élément lié par liaison totale avec un second élément entraîne le même mouvement au second élément, autrement dit le premier élément et le second élément se comportent comme une pièce monobloc.

Une fois fixé au support 13, le dispositif de fixation 1 peut servir à maintenir assemblés ce support 13 et un organe rapporté vissé dans l'insert 9. Notamment dans sa phase initiale d'engagement des filets complémentaires l'un dans l'autre, l'opération de vissage de cet organe rapporté est grandement facilitée par les débattements de l'écrou 4, notamment par son débattement angulaire. Cela constitue un avantage dont les bénéfices sont particulièrement importants dans le cas d'assemblages effectués en série, avec des cadences élevées.

Le dispositif de fixation décrit ci-avant permet un désalignement ou rattrapage de jeu jusqu'à six fois plus important qu'un dispositif selon l'art antérieur.

Comme décrit ci-avant, le dispositif de fixation est apte après son sertissage à fixer un dispositif complémentaire par exemple par emboîtement dans le cas de la rotule, ou un organe vissé dans le filet hélicoïdal.

## Revendications

1. Dispositif de fixation (1) comportant :
- un élément à sertir (2) comprenant un premier fût (3),
- un écrou (4) comportant un second fût (5) disposé dans la continuité du premier fût (3), ledit second fût (5) étant muni d'un taraudage (6) intérieur, et un élément d'accroche (7) monté sur le premier fût (3) de sorte à permettre un débattement radial du second fût (5) par rapport au premier fût (3),
**caractérisé en ce que** :
- l'élément d'accroche (7) est configuré avec le premier fût (3) pour former une butée permettant un débattement axial du second fût (5) par rapport au premier fût (3) tout en limitant ce débattement axial de manière à empêcher un désassemblage de l'écrou (4) et de l'élément à sertir (2),
- un insert (9) est vissé dans le taraudage (6) du second fût (5), ledit insert (9) pénétrant dans un tronçon du premier fût (3) ayant un diamètre intérieur supérieur au diamètre extérieur de l'insert (9) de sorte à permettre le débattement radial du second fût (5) par rapport au premier fût (3) et former une butée dudit débattement radial.

2. Dispositif selon la revendication 1, **caractérisé en ce que** la butée de débattement radial et la butée de débattement axial sont agencées pour maintenir dans un état assemblé l'élément à sertir (2) avec l'écrou (4).

3. Dispositif selon l'une des revendications 1 à 2, **caractérisé en ce que** l'insert (9) est un filet hélicoïdal.

4. Dispositif selon l'une quelconque des revendications 1 à 3, **caractérisé en ce que** le premier fût (3) comporte un premier logement (11 a) recevant l'élément d'accroche (7) de l'écrou (4), ledit premier logement (11a) ayant une forme complémentaire à l'élément d'accroche (7) et des dimensions supérieures à celles de l'élément d'accroche (7) pour permettre les débattements axial et radial.

5. Dispositif selon la revendication 4, **caractérisé en ce que** le premier logement (11a) est formé dans le premier fût (3) au niveau de sa surface extérieure.

6. Dispositif selon la revendication 5, **caractérisé en ce que** le premier logement (11a) forme une ouverture débouchante entre une surface intérieure et la surface extérieure du premier fût (3).

7. Dispositif selon la revendication 6, **caractérisé en ce que** le premier fût comporte un second logement (11 b) formant une ouverture débouchante entre la surface intérieure et la surface extérieure du premier fût (3), le second logement (11 b) étant disposé face au premier logement (11 a), ledit second logement (11 b) coopérant avec un élément d'accroche associé.

8. Dispositif selon quelconque des revendications précédentes, **caractérisé en ce que** l'élément d'accroche (7) a une forme de T, la base du T formant la jonction de l'élément d'accroche (7) avec une portée d'extrémité du second fût (5), ledit élément d'accroche (7) s'étendant dans la continuité du second fût (5).

9. Dispositif selon l'une quelconque des revendications précédentes, **caractérisé en ce que** l'élément à sertir (2) comporte une collerette (12) s'étendant radialement à une extrémité du premier fût (3) opposée à l'écrou (4), et **en ce que** le premier fût (3) comporte une zone fusible (8) disposée entre la collerette (12) et une zone de coopération de l'élément d'accroche (7) avec le premier fût (3).

10. Procédé d'assemblage d'un dispositif selon la revendication 1, **caractérisé en ce qu'**il comporte les étapes successives suivantes :
- monter l'élément d'accroche (7) sur le premier fût (3),
- visser dans le taraudage (6) du second fût (5) l'insert (9) de sorte que ce dernier ait une portion pénétrant dans le premier fût (3).

## Patentansprüche

1. Befestigungsvorrichtung (1), die umfasst:
- ein einzusetzendes Element (2), das einen ersten Schaft (3) umfasst, eine Mutter (4), die einen zweiten Schaft (5) umfasst, der in Kontinuität zum ersten Schaft (3) angeordnet ist, wobei der zweite Schaft (5) mit einem Innengewinde (6) versehen ist, und ein Verankerungselement (7), das so am ersten Schaft (3) montiert ist, dass es einen Radialausschlag des zweiten Schafts (5) bezüglich dem ersten Schaft (3) erlaubt,
**dadurch gekennzeichnet, dass**:
- das Verankerungselement (7) am ersten Schaft (3) vorgesehen ist, um einen Anschlag zu bilden, der einen Axialausschlag des zweiten Schafts (5) bezüglich dem ersten Schaft (3) ermöglicht und dabei gleichzeitig diesen Axialausschlag begrenzt, um so eine Trennung von Mutter (4) und einzusetzendem Element (2) zu verhindern,
- ein Einsatz (9) in das Gewinde (6) des zweiten Schafts (5) geschraubt wird, wobei der Einsatz (9) in ein Teilstück des ersten Schafts (3) hineinreicht, das einen Innendurchmesser hat, der größer ist als der Außendurchmesser des Einsatzes (9), um den Radialausschlag des zweiten Schafts (5) bezüglich dem ersten Schaft (3) zu ermöglichen und einen Anschlag für diesen Radialausschlag zu bilden.

2. Vorrichtung nach Anspruch 1, **dadurch gekennzeichnet, dass** der Radialausschlag-Anschlag und der Axialausschlag-Anschlag so angeordnet sind, dass sie das einzusetzende Element (2) in einem zusammengebauten Zustand mit der Mutter (4) halten.

3. Vorrichtung nach einem der Ansprüche 1 bis 2, **dadurch gekennzeichnet, dass** der Einsatz (9) ein spiralförmiges Gewinde ist.

4. Vorrichtung nach einem der Ansprüche 1 bis 3, **dadurch gekennzeichnet, dass** der erste Schaft (3) eine erste Aufnahme (11a) hat, die das Verankerungselement (7) der Mutter (4) aufnimmt, wobei diese erste Aufnahme (11 a) eine zu dem Verankerungselement (7) komplementäre Form und größere Abmessungen als das Verankerungselement (7) hat, um ein axiales und radiales Ausschlagen zu ermöglichen.

5. Vorrichtung nach Anspruch 4, **dadurch gekennzeichnet, dass** die erste Aufnahme (11a) im ersten Schaft (3) im Bereich seiner Außenfläche gebildet ist.

6. Vorrichtung nach Anspruch 5, **dadurch gekennzeichnet, dass** die erste Aufnahme (11a) ein Durchgangsloch zwischen einer Innenfläche und der Außenfläche des ersten Schafts (3) bildet.

7. Vorrichtung nach Anspruch 6, **dadurch gekennzeichnet, dass** der erste Schaft eine zweite Aufnahme (11 b) aufweist, die ein Durchgangsloch zwischen der Innen- und Außenfläche des ersten Schafts (3) bildet, wobei die zweite Aufnahme (11b) gegenüber der ersten Aufnahme (11a) angeordnet ist und die zweite Aufnahme (11 b) mit einem zugehörigen Verankerungselement zusammenwirkt.

8. Vorrichtung nach einem der vorstehenden Ansprüche, **dadurch gekennzeichnet, dass** das Verankerungselement (7) T-förmig ist, wobei der Fuß des T die Verbindung zwischen dem Verankerungselement (7) und einer Endfläche des zweiten Schafts (5) bildet und sich das Verankerungselement (7) in Kontinuität zum zweiten Schaft (5) erstreckt.

9. Vorrichtung nach einem der vorstehenden Ansprüche, **dadurch gekennzeichnet, dass** das einzusetzende Element (2) einen Kragen (12) aufweist, der sich radial an einem Ende des ersten Schafts (3) entgegengesetzt zur Mutter (4) erstreckt, und dass der erste Schaft (3) eine schmelzbare Zone (8) aufweist, die zwischen dem Kragen (12) und einem Bereich angeordnet ist, in dem das Verankerungselement (7) mit dem ersten Schaft (3) zusammenwirkt.

10. Verfahren zum Verbinden einer Vorrichtung nach Anspruch 1, **dadurch gekennzeichnet, dass** es die folgenden aufeinanderfolgenden Schritte umfasst:
- Montage des Verankerungselements (7) an den ersten Schaft (3),
- Einschrauben des Einsatzes (9) in das Gewinde (6) des zweiten Schafts (5), sodass der Einsatz einen Bereich aufweist, der in den ersten Schaft (3) hineinreicht.

## Claims

1. A fixing device (1) comprising:
- a crimping part (2) comprising a first shank (3),
- a nut (4) comprising a second shank (5) arranged in the continuity of the first shank (3), said second shank (5) being provided with an internal thread (6) and with a securing part (7) mounted on the first shank (3) so as to enable a radial movement of the second shank (5) with respect to the first shank (3),
**characterized in that**:
- the securing part (7) is configured with the first shank (3) to form a stop enabling an axial movement of the second shank (5) with respect to the first shank (3) while at the same time limiting this axial movement so as to prevent separation of the nut (4) and of the crimping part (2),
- an insert (9) is screwed into the thread (6) of the second shank (5), said insert (9) penetrating into a section of the first shank (3) having a larger inner diameter than the outer diameter of the insert (9) so as to enable radial movement of the second shank (5) with respect to the first shank (3) and to form a stop of said radial movement.

2. The device according to claim 1, **characterized in that** the stop of the radial movement and the stop of the axial movement are arranged to keep the crimping part (2) in an assembled state with the nut (4).

3. The device according to one of claims 1 to 2, **characterized in that** the insert (9) is a helical screw thread.

4. The device according to any one of claims 1 to 3, **characterized in that** the first shank (3) comprises a first housing (11 a) receiving the securing part (7) of the nut (4), said first housing (11 a) having a complementary shape to the securing part (7) and larger dimensions than those of the securing part (7) to enable the axial and radial movements.

5. The device according to claim 4, **characterized in that** the first housing (11 a) is formed in the first shank (3) at the level of its outer surface.

6. The device according to claim 5, **characterized in that** the first housing (11 a) forms an opening that opens out between an inner surface and the outer surface of the first shank (3).

7. The device according to claim 6, **characterized in that** the first shank comprises a second housing (11 b) forming an opening that opens out between the inner surface and the outer surface of the first shank (3), the second housing (11 b) being arranged facing the first housing (11 a), said second housing (11 b) collaborating with an associated securing part.

8. The device according to any one of the foregoing claims, **characterized in that** the securing part (7) is T-shaped, the base of the T forming the junction of the securing part (7) with an end surface of the second shank (5), said securing part (7) extending in the continuity of the second shank (5).

9. The device according to any one of the foregoing claims, **characterized in that** the crimping part (2) comprises a flange (12) extending radially at one end of the first shank (3) opposite the nut (4), and **in that** the first shank (3) comprises a fusible area (8) arranged between the flange (12) and a collaboration area of the securing part (7) with the first shank (3).

10. An assembly method of a device according to claim 1, **characterized in that** it comprises the following successive steps:
- fitting the securing part (7) on the first shank (3),
- screwing the insert (9) into the thread (6) of the second shank (5) so that the latter has a portion penetrating into the first shank (3).
